# EUROPEAN PATENT SPECIFICATION

(11) **EP 2 199 106 B1**
(45) Date of publication and mention of the grant of the patent: **24.05.2017**
(21) Application number: 09179742.3
(22) Date of filing: 17.12.2009
(51) Int. Cl.: B60C 9/26, B60C 9/18, B60C 9/20

(54) **Pneumatic tire**
Luftreifen
Pneu

(30) Priority: 19.12.2008 US 139168 P; 23.09.2009 US 564959
(43) Date of publication of application: 23.06.2010
(73) Proprietor: The Goodyear Tire & Rubber Company, Akron, OH 44316-0001 (US)
(72) Inventor: Georges, Francois Pierre Charles, B-4970, Stavelot (BE); Mathonet, Vincent Benoit, B-6720, Habay-la-Neuve (BE); Gillard, Jean-Michel Alphonse Fernand, B-6700, Arlon (BE); Krier, Roland Willibrord, L-6834, Biwer (LU); Nicolas, Bernard Robert, B-6700, Arlon (Bonnert) (BE)
(74) Representative: Kutsch, Bernd

(56) References cited:
- EP-A1- 1 477 333
- EP-A1- 1 908 609
- EP-A2- 0 501 782
- US-A- 6 125 900

## Description

### Field of the Invention

This invention relates to a pneumatic tire having a carcass and a belt reinforcing structure, and, more particularly, to radial ply tires for use in aircraft, trucks and other high load applications.

### Background of the Invention

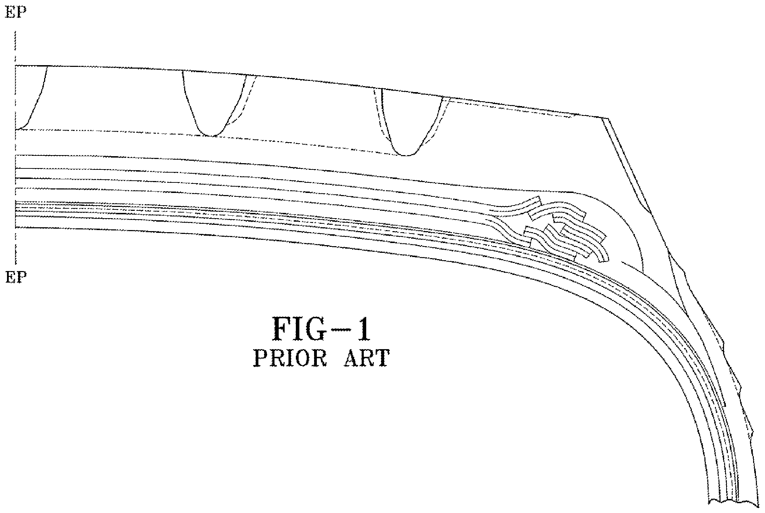

In tires that have heavy loads such as truck tires or aircraft tires, zigzag belt layers have been utilized for the belt package. Zigzag belt layers eliminate cut belt endings at the shoulder. An exemplary portion of a tire with a zigzag belt layer is shown in Figure 1. The advantage of zigzag belt layers is that there are no cut belt edges near the shoulder, which greatly improves tire durability. The disadvantage to zigzag belt layers is that at the edges near the shoulder, there are overlapping layers. In some areas there are too many layers, such as four or more layers typically, and even six or more layers in some locations. The reduction of overlapping strips in the shoulder area has been shown to improve durability. Thus it is desired to have a tire with improved belt edge durability without excess weight.

US-A- 6,125,900 describes a pneumatic tire having a belt structure made by zigzag winding a strip of material from one lateral belt edge to another lateral belt edge.

EP-A1-1 477 333 describes a pneumatic tire in accordance with the preamble of claim 1.

EP-A- 0 501 782 describes a tire comprising a zigzag belt structure.

### Summary of the Invention

The invention relates to a tire according to claim 1.

Dependent claims refer to preferred embodiments of the invention.

In one aspect of the invention, the strip forming the zigzag belt structure is layed up in a first zigzag winding extending from a first lateral belt edge to a second lateral belt edge in a zigzag wavelength having a first amplitude W1 followed by a second amplitude W2 in the opposite direction of said first amplitude, wherein the strip forming the zigzag belt structure is layed up in a second zigzag winding extending from a first lateral belt edge to a second lateral belt edge in a zigzag wavelength having a first amplitude followed by a second amplitude in the opposite direction of said first amplitude.

Preferably, the first and second zigzag windings each have turns at the first and second lateral edges, wherein the strip at each edge are extended in a circumferential direction for a distance L.

The first zigzag winding may be alternated with the second zigzag winding or may be not alternated with the second zigzag winding.

In one aspect of the invention, the belt at each edge is radiused.

In yet another aspect of the invention the belt at each edge extends in a substantially circumferential direction for a specified distance L.

In yet another aspect of the invention the zigzag belt structure has a first belt edge in a first winding, and a second belt edge in a second winding, wherein the midpoint of the fist belt edge is circumferentially offset from the midpoint of the second belt edge.

In yet another aspect of the invention, the zigzag belt structure is formed from a first zigzag winding having a first amplitude Wmax at a first lateral end and a second amplitude Wmin at a second lateral end, and Wmax is greater than Wmin, and a second zigzag winding having a first amplitude Wmin at a first lateral end and a second amplitude Wmax at a second lateral end, and wherein the second zigzag winding is located adjacent said first zigzag winding.

The zigzag belt structure may further comprise a third zigzag winding having a first amplitude Wmax at a first lateral end and a second amplitude Wmin at a second lateral end, wherein the first and second lateral ends of the third windings are circumferentially offset from the first and second lateral ends of the first zigzag winding and the second zigzag winding, respectively.

The zigzag belt structure may further comprise a fourth zigzag winding having a first amplitude Wmin at a first lateral end, and a second amplitude Wmax at a second lateral end, wherein the first and second lateral ends of the fourth zigzag windings are each circumferentially offset from the first and second lateral ends of the first zigzag winding and the second zigzag winding, respectively.

In a preferred aspect of the invention, the radially inner working belt has a width equal or about equal to the tread arc width or the tire.

In a preferred aspect of the invention, the radially outer working belt has a width which ranges from 60% to 88% of the tread arc width or the tire.

In a preferred aspect of the invention, the radially inner working belt is the widest belt of the belt reinforcement structure.

In a preferred aspect of the invention, the zigzag belt structure has a width in a range of from 70% to 80%, more preferably 75%, of the tread arc width of the tire.

The zigzag belt structure is the narrowest belt of the belt structure.

In another aspect of the invention, the zigzag belt structure has a width in the range of from 50% to 75% of the tread arc width of the tire.

In a preferred aspect of the invention, the zigzag belt structure is reinforced with a wire or cord having a % elongation at 10% of breaking load greater than 0.40 %, preferably greater than 0.45 %, when taken from wire or cord from a cured tire.

In a preferred aspect of the invention, the strip forming the zigzag belt structure is reinforced with steel cord or aramid cord.

The tire in accordance with the invention preferably is a truck tire or a radial medium truck tire.

### Definitions

"Aspect ratio" of the tire means the ratio of its section height (SH) to its section width (SW) multiplied by 100% for expression as a percentage.

"Axial" and "axially" mean lines or directions that are parallel to the axis of rotation of the tire.

"Bead" means that part of the tire comprising an annular tensile member wrapped by ply cords and shaped, with or without other reinforcement elements such as flippers, chippers, apexes, toe guards and chafers, to fit the design rim.

"Carcass" means the tire structure apart from the belt structure, tread, undertread, and sidewall rubber over the plies, but including the beads.

"Circumferential" means lines or directions extending along the perimeter of the surface of the annular tread perpendicular to the axial direction.

"Cord" means one of the reinforcement strands which the plies in the tire comprise.

"Equatorial plane (EP)" means the plane perpendicular to the tire's axis of rotation and passing through the center of its tread.

"Radial-ply tire" means a belted or circumferentially-restricted pneumatic tire in which the ply cords which extend from bead to bead are laid at cord angles between 65-90 degrees with respect to the equatorial plane of the tire.

"Winding" means the pattern of the strip formed in a first revolution of the strip around a tire building drum, tire or core.

### Brief Description of the Drawings

The invention will be described by way of example and with reference to the accompanying drawings in which:
FIG. 1 is a schematic sectional view of part of a prior art tire having a zigzag belt;
FIG. 2 illustrates a partial cross-section of an exemplary radial tire of the present invention;
FIG. 3 is an example of a tire building drum showing the belt of the present invention being formed;
FIG. 4A is an example of a tire building drum layed out circumferentially for illustration purposes illustrating a first full revolution of the strip layup forming the zigzag belt;
FIG. 4B is the tire building drum of FIG. 4A illustrating only a second revolution of the cord pattern of the zigzag belt (the first revolution was removed for clarity);
FIG. 4C is a closeup view of the strip at the belt edge undergoing a U turn;
FIG. 5A is an example of a tire building drum layed out circumferentially for illustration purposes illustrating a first full revolution or first winding of the strip layup forming the zigzag belt;
FIG. 5B is the tire building drum of FIG. 5A illustrating the second revolution of the drum showing the first and second winding of the strip layup forming the zigzag belt;
FIG. 5C is the tire building drum of FIG. 5A illustrating the third revolution of the drum showing the first, second and third winding of the strip layup forming the zigzag belt;
FIG. 5D is the tire building drum of FIG. 5A illustrating the fourth revolution of the drum showing the first, second, third and fourth winding of the strip layup forming the zigzag belt;
FIG. 6 illustrates the zigzag belt edge;
FIG. 7 illustrates a cross-sectional view of the zigzag belt edge at sections A-A, B-B, C-C, D-D and E-E showing the estimated overlap of layers;
FIG. 8 illustrates a cross-sectional view of the zigzag belt edge at sections A-A, B-B, C-C, D-D and E-E showing the estimated overlap of layers for the prior art zigzag belt of Fig. 1;
FIGS. 9A-9C illustrate a zigzag belt having a traverse offset of 0.1 mm, and wherein the drum offset angle is varied from 6.75 deg shown in Fig. 9A, to 13.5 deg shown in Fig. 9B, and 27 deg shown in Fig. 9C;
FIGS. 10A-10C illustrate a zigzag belt having a traverse offset of 8 mm, and wherein the drum offset angle is varied from 6.75 deg shown in Fig. 10A, to 13.5 deg shown in Fig. 10B, and 27 deg shown in Fig. 10C.

### Detailed Description of an Example Embodiment the Invention

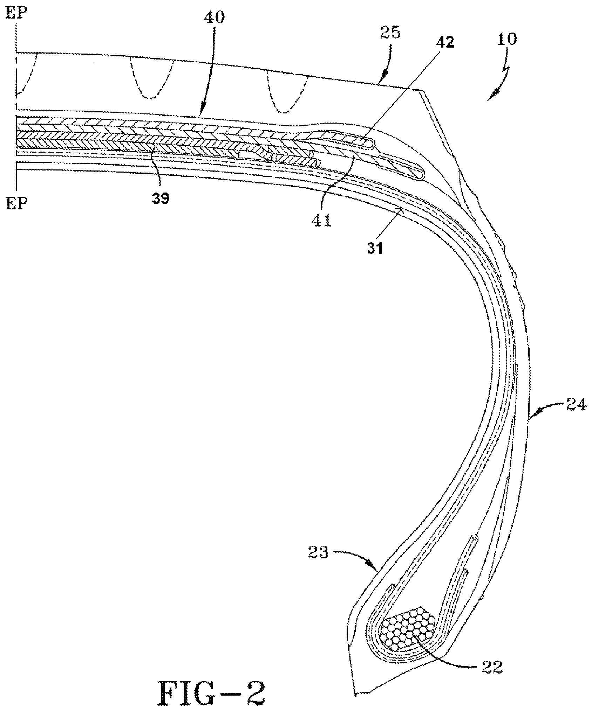

FIG. 2 illustrates a partial cross-section of an exemplary radial tire 10 which includes a bead portion 23 having a bead core 22 embedded therein, a sidewall portion 24 extending radially outward from the bead portion 23, and a cylindrical tread portion 25 extending between radially outer ends of the sidewall portions 24. The tire 10 is reinforced by a carcass 31 toroidally extending from one bead portion 23 to the other bead portion (not shown). The carcass 31 may include at least one carcass ply. The carcass ply is anchored to the bead core and for example, may wind around each bead core 22 from inside of the tire 10 away from the equatorial plane EP to form turnup portions. A belt reinforcement package 40 is arranged between the carcass 31 and the tread portion 25.

The belt reinforcement structure 40, according to an example embodiment of the present invention, includes a pair of working belts, 41, 42. Belt 41 is located radially inwards of 42. Belt 41 has a width which is preferably equal to the tread arc width or preferably in a range of from 0.9 to 1.1 times the tread arc width. Preferably, belt 41 has a belt width substantially equal to the tread arc width. The belt angle (also called breaker angle) of belt 41 is between 16 and 30 degrees, preferably with a left orientation, more preferably in the range of 19 to 25 degrees. The belt angles are measured with respect to the circumferential direction. Belt 41 is preferably reinforced with steel cord, the steel cord preferably having a 4+3x0.35 construction. The % elongation at 10% of breaking load preferably ranges from 0.18 to 0.26, and more preferably greater than 0.2. The % elongation is measured on a cord taken from a vulcanized tire. The % elongation at 10% of breaking load for a bare, green cord preferably ranges from 0.2 % to 0.27 %.

Belt 42 is the second member of the working belt pair. Belt 42 has a width which is preferably less than the width of belt 41 (the other working belt), and is preferably radially outward of belt 41. Preferably, belt 42 has a width less than the width of belt 41 by a step off, which ranges from 10 mm to 20 mm or from 3% to 15%, preferably 5% to 10%, of the width of the belt 41. Belt 42 has a belt angle (or breaker angle) between 16 and 30 degrees, preferably with a right orientation, more preferably in the range of 19 to 25 degrees. Belt 42 is preferably reinforced with the same wire or cord as belt 41, having the same construction with the same but opposite angular orientation as 41.

The belt structure 40 further comprises a zigzag belt structure 39 which is preferably located radially inward of both of the working belts 41, 42. The zigzag belt 39 may be formed from using any of the zigzag patterns as described below. Preferably, the zigzag belt structure has 0.5 zigzag wave per drum revolution or one zigzag wave per drum revolution. The belt width of the zigzag belt is preferably in the range of 70% to 80% of the tread arc width, and even more preferably in the range of 73 - 77 %. The zigzag belt 39 may be reinforced with steel cord formed in a high elongation construction such as, for example, 3x 7x 0.22 HE (HE = high elongation), and having an EPI (EPI = ends per inch) of 14 or in a range of from 10 to 18. The high elongation wire or cord preferably has a % elongation at 10% of the breaking load ranging from 1.7- 2.05 % for a bare, green cord. The high elongation wire or cord preferably has a % elongation at 10% of the breaking load ranging from 0.45 - 0.68 % taken from cured tire. Another example of a cord construction suitable for the invention is made of steel having a 4x7x0.26 HE construction, with an EPI of 18.

Alternatively, the zigzag belt may be nonmetal. One example of a nonmetal cord which may be used is aramid, such as aramid having a 1670/3 construction with a density of 24 EPI (ends per inch). The aramid may also have a 3300/3 construction with an EPI of 24. The % elongation at 10% of breaking load for a bare cord typically is 0.98%.

It is preferred that the zigzag belt structure 39 be formed of a cord having a rigidity or stiffness which is defined as follows. The rigidity is analogous to a spring having an equation F=KX, wherein F is the force by unit of the transversal width of the strip (N/inch); K is the rigidity of force per transverse width divided by the % elongation in the longitudinal direction, (N/inch) and X is the relative % elongation in the longitudinal direction. Thus on a plot of force/transverse width vs. % relative elongation, the rigidity would equal the slope of the curve. It is desired to select a cord and cord density in the transversal direction (EPI) providing a strip rigidity in the range of from 300,000 N/inch to 800,000N/inch, and more preferably in the range of from 350,000 to 750,000 N/inch. The cord properties as described above are measured using a cord taken from a cured tire.

The aspect ratio of the tire described above may vary. The aspect ratio is preferably in the range of 45 to 90, such as in a range of from 50 to 75. The tire may have a net to gross ratio in the range of 70 to 90, more preferably in the range of 74 to 86, more preferably about 78 to 84.

### ZIGZAG BELT CONSTRUCTION

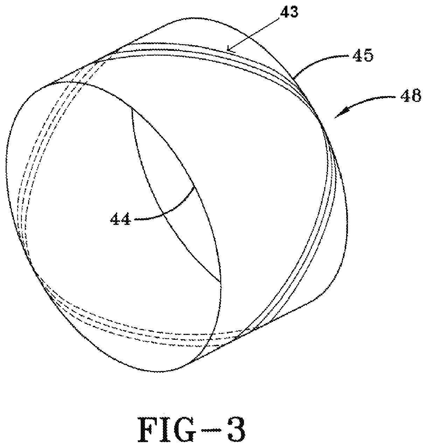

Figure 3 illustrates a tire building drum 48 having axial circumferential edges 44, 45. In order to form the zigzag belt structure 39 on the tire building drum, the tire building drum is rotated as a rubberized strip 43 of cord is wound around the drum in a generally circumferential direction, extending in an alternating fashion from one drum edge 44 to the other drum edge 45.

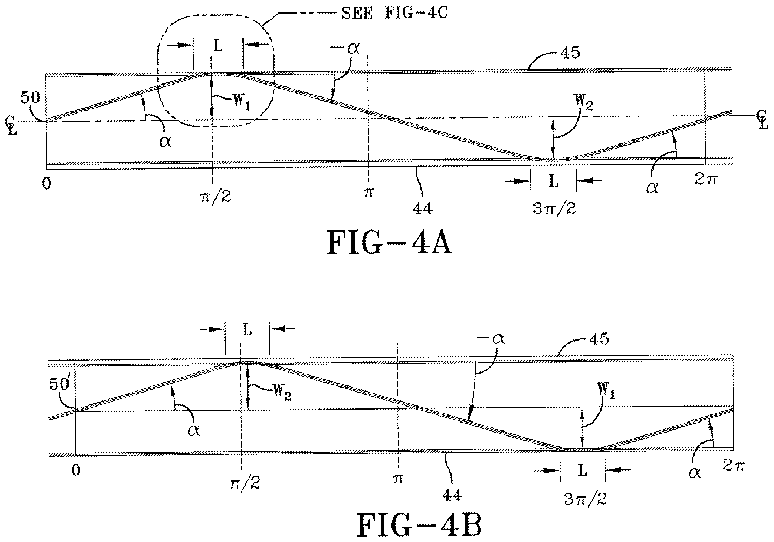

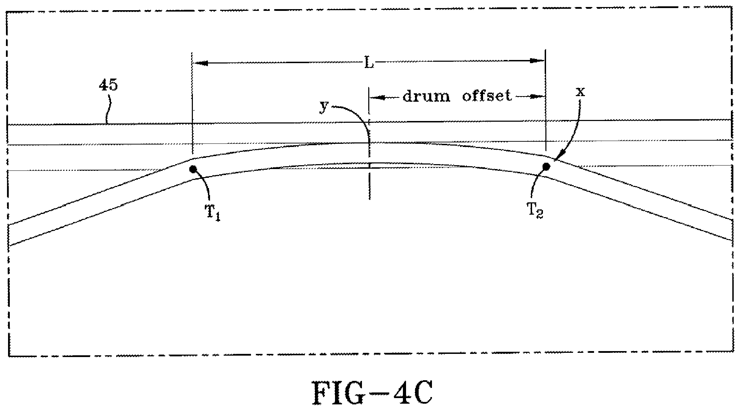

Figures 4A and 4B illustrate the tire building drum 48 wherein the circumference of the drum is laid out flat, from 0 radians (degrees) to 2π radians (360 deg). Figure 4A illustrates a first winding for a first drum revolution of the zigzag belt structure 39 being formed on the drum. The invention may also be formed on a core or tire, and is not limited to being formed on a tire building drum. For illustration purposes, the initial starting point 50 will be the mid-circumferential centerplane CL of the drum at 0 radians, however any starting point location may be used. The strip is first angled at an angle α to the edge 45 of the tire building drum. This correlates to a location of about π/2 radians for one zigzag per revolution. The following description illustrates the pattern for one zigzag wave per revolution, and is not limited to same, as the zigzag wave per revolution may vary as desired. At the edge 45 of the tire building drum, the strip has a first axial width or amplitude W1, as measured from the center or mid-circumferential plane CL of the drum. W1 is preferably the maximum axial width located near the edge of the drum. Next, the strip may optionally continue for a distance L, for example for a distance L of 5 mm to 100 mm or from 15 mm to 70 mm, in a circumferential (0 degree) direction at the edge 44. As shown in Fig. 4C, the strip is preferably U turned without sharp angles, and preferably is radiused at the transition points T1 and T2. As shown in FIG. 4A, the strip is then angled at preferably - α towards the opposite drum edge 44. At about 3/2 π radians, the strip has a second axial width or amplitude W2, which is measured from the centerplane, and is different than W1. W1 is preferably greater than W2. Thus, the strip does not extend completely to the axial end 44 of the drum. Next, the strip may be optionally oriented in a substantially circumferential direction (0 degrees) for a circumferential distance of prerably again the distance L. Finally, the strip is angled towards the mid-circumferential centerplane at an angle α. The strip reaches the mid-circumferential centerplane at about 2π radians.

The layup of the strip for a second winding is shown in Fig. 4b. For the sake of clarity, the first winding has been removed. The starting point 50' of the second winding has been axially indexed a desired amount, depending upon the amount of gap between successive strips desired. Preferably, the gap between successive strips is between 0.5 and 2.0 times the width of the strip, more preferably 1.0 times the strip width. For illustration purposes, the second winding of the strip is indexed a strip width so it abuts with the first winding. Starting at 50', the strip is first angled at an angle α to the edge 45 of the tire building drum. This correlates to a location of about π/2 radians for one zigzag per revolution. At this location, the strip has an axial width or amplitude W2, as measured from the center or mid-circumferential plane CL of the drum. Next, the strip may optionally continue for the distance L in a circumferential (about 0 degrees) direction at the edge 44. As shown in Fig. 4C, the strip is preferably turned at the drum edge without sharp angles, and preferably is radiused at the transition points T1, T2. As shown in FIGS. 4b and 4C, the strip is then angled from the transition point T2 at preferably - α towards the opposite drum edge 44. At about 3/2 π radians, the strip has an axial width or amplitude W1. Next, the strip may optionally be oriented in a circumferential direction (about 0 degrees) for the circumferential distance L. As shown in Fig. 4C, the strip is preferably turned at the drum edge without sharp angles, and preferably is radiused at the transition points T1, T2. Finally, the strip is angled towards the mid-circumferential centerplane at the angle α. The strip reaches the mid-circumferential centerplane at 2π radians.

Thus in a first strip winding, the strip traversed from the starting point to a first amplitude W1, then to a second amplitude W2, and then back to the starting point. W1 and W2 are in opposite directions from the centerplane, and W₁≠ W₂, and preferably W₁ > W₂ such as W₁ ≥ 1.1 W₂ or W₁ ≥ 1.02 W₂ and W₁ ≤ 1.2 W₂. Then in a second strip winding, the strip traversed from an indexed starting point to a first amplitude W2, then to a second amplitude W1, and then back to the starting point. Thus the strip windings preferably abut, but may also be overlapped or be spaced apart. The strip may also be offset circumferentially at the edges, alone, or in combination with the variable amplitude zigzag pattern.

A second embodiment of the invention is as described above, except for the following differences. If there are N revolutions required to form the zigzag belt structure, then the first N/2 revolutions, each zigzag winding has a pattern of W1-W2. For the second half (N/2) revolutions, each zigzag winding has a pattern W2-W1, wherein W1 and W2 extend in opposite directions from the centerplane, and W₁≠ W₂. Preferably W₁ > W₂.

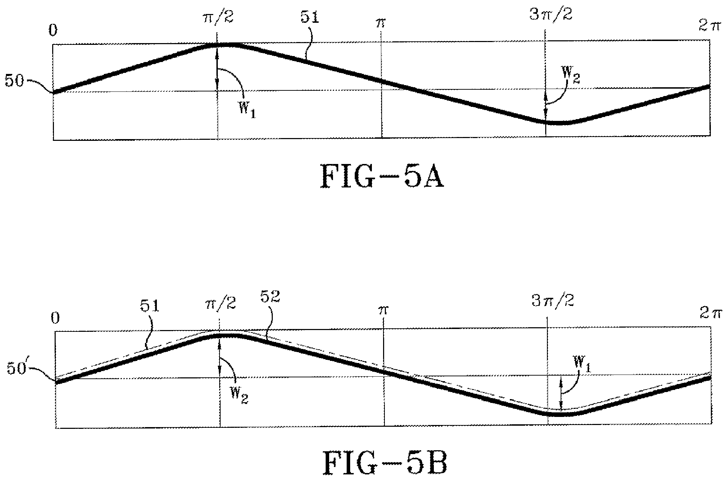

A third embodiment of the invention is now described. Figure 5A illustrates a first winding of the strip having a first amplitude W1 followed by a second amplitude W2 in the opposite direction. Figure 5B illustrates a second winding of the strip wherein the strip has a first amplitude W2 followed by a second amplitude W1 in the opposite direction. The second winding has been indexed a desired distance from the first winding, and thus may abut (as shown), overlap or be spaced apart.

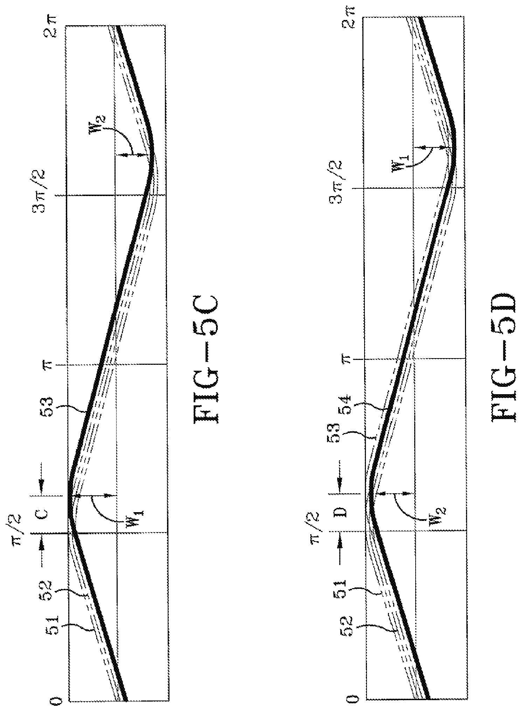

Figure 5C illustrates a third winding of the strip, wherein the strip winding has been circumferentially shifted or offset from the previous two windings of strip, so that the turn at the edge is offset from the edges of the previous windings. Just past the π/2 location an offset distance C, the strip has a W1 amplitude and a W2 amplitude just past the 3 π/2 location. Figure 5D illustrates a fourth strip winding, wherein the strip is also circumferentially offset from the first, second windings, in order to reduce the belt strip gauge at the outer belt edge. As shown, just past the π/2 location at an offset distance D, the strip has a first amplitude W2 and a second amplitude W1 at an offset distance D. The offset distance D is different than the offset distance C. Preferably, the offset distance D is less than the offset distance C. In order to form the complete belt layer, the sequence as described is repeated until the belt layer is formed.

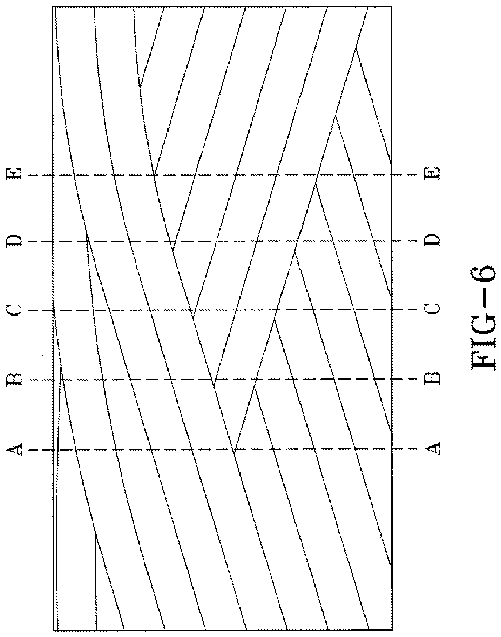

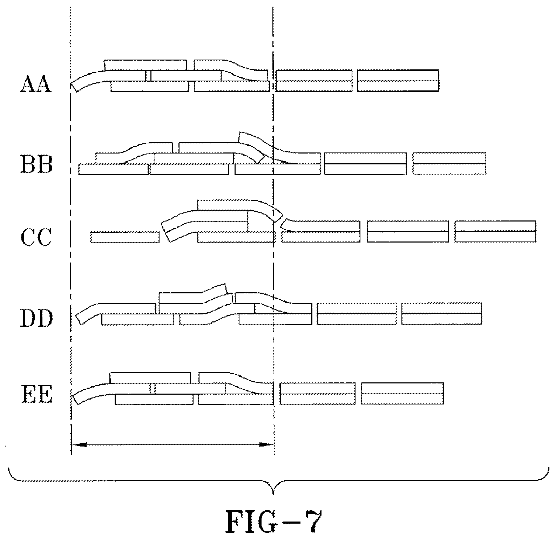

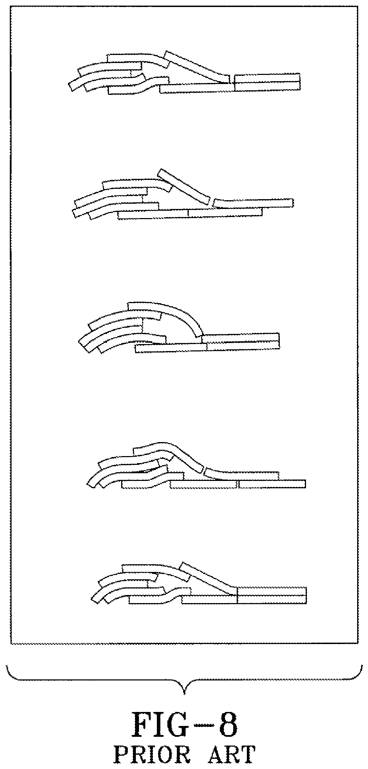

Figure 6 illustrates one zigzag wave per revolution belt in the area near the belt edge having multiple layers of strips. Figure 7 illustrates the cross-sectional views of the belt edge taken at various locations A-A through E-E. As shown, the amount of strip overlap varies from about one layer to a maximum of 4 layers in section C-C. Figure 8 illustrates the prior art zigzag belt layup where there are up to six layers overlapping each other. Thus the belt configuration of the present invention has reduced the number of overlapping layers which are believed to reduce tire durability.

The strip is formed of a rubberized ribbon of one or more cords. The width of the strip may vary, and may be for example, 5-14 mm wide, and more preferably 10-13 mm wide. The cord reinforcements may be formed of nylon, polyester, aramid or steel. All of the above exemplary embodiments were illustrated with one zigzag wave per one drum revolution. The invention may also include N zigzag waves per one drum revolution, wherein N is preferably 0.25 or greater. N may also be an integer ≥ 1. For example, the strip may be layed up so that one full zigzag wave occurs in 2 full drum revolutions, or ½ zigzag per revolution. The invention as described above may also abut the strips, thus having no gap in spacing of consecutive windings. Alternatively, the successive winding of strips may be overlapped from 1 % to 100%, preferably 20% to 80% of the strip width. Alternatively, the successive winding of strips may have a gap distance G formed therebetween. G may vary from 1 % to 100% of the strip width, preferably 30% to 100% of the strip width.

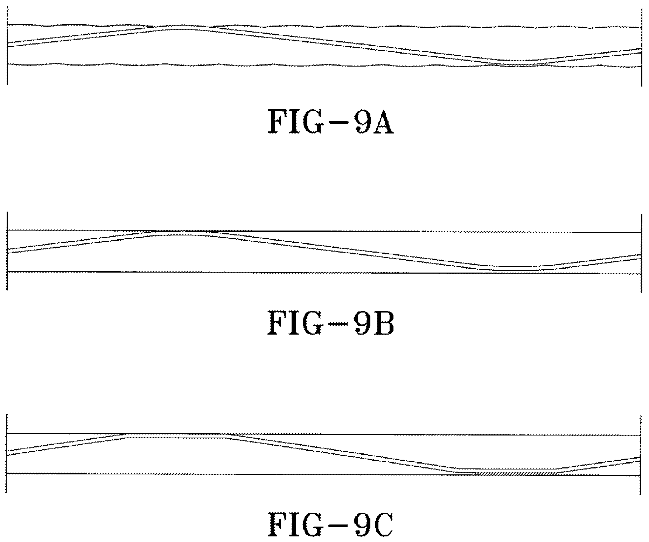

Another variable which may be utilized is the drum offset, which is best shown in Fig. 4c. The drum offset is the circumferential distance of the drum (measured in degrees or radians) from the strip edge at point Y to point X. In other words, the drum offset is half the circumferential distance over which the strip does a U-turn, as measured from the point Y closest to the edge, to the point X where the turn is completed. The drum offset or turning distance can be varied, effectively elongating the edge in the circumferential direction if increased, or resulting in a sharper turning angle if decreased. For example, the drum offset may range from 5 degrees to 30 degrees, and more preferably from 10 to 16 degrees. As the drum offset increases, the angle of the strip α also increases. Figures 9A-9C illustrates a strip layed upon the drum in a 1 zigzag per drum revolution. Figure 9A illustrates a drum offset of 6.75 degrees, resulting in an α of 6.65 degrees. Figure 9B illustrates a drum offset of 13.5 degrees, resulting in an α of 7.22 degrees. Figure 9C illustrates a drum offset of 27 degrees, resulting in an α of 8.76 degrees. As can be seen from a review of all of the figures, as the drum offset distance is increased, the angle at the turnaround elongates along the edge and results in a smoother pass. The increase in drum offset also results in a slighter higher α. As the drum offset is increased, the amount of overlap of layers of the strip increases from 2.83 in Fig. 9A, to 3.87 in Fig. 9B, and over 6 in Fig. 9C.

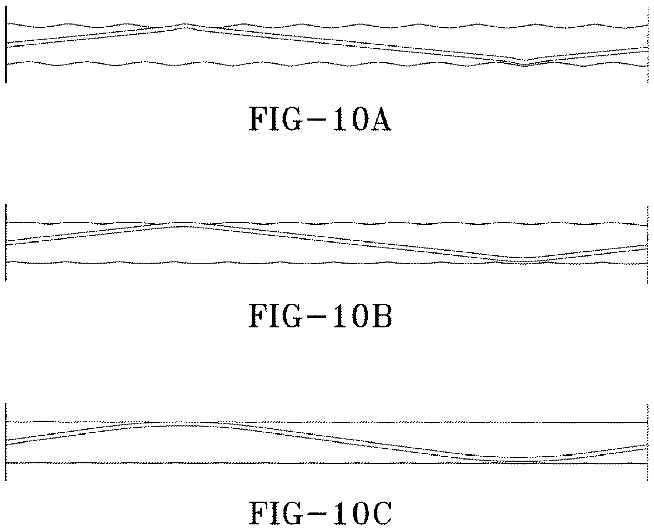

Another variable which may be utilized is the traverse offset. The traverse offset is the axial distance of the belt edge from the edge of the drum edge, in mm. By increasing the traverse offset, the strip starts to turn earlier, and can result in uneven belt edges as shown in Figures 10A and 10B, as compared to Figures 9A and 9B. Figures 10A-10C illustrate an 8 mm traverse offset. Figure 10A illustrates a drum offset of 6.75 degrees, resulting in an α of 5.96 degrees. Figure 10B illustrates a drum offset of 13.5 degrees, resulting in an α of 6.48 degrees. Figure 10C illustrates a drum offset of 27 degrees, resulting in an α of 7.18 degrees. The effect of decreasing the traverse offset results in a belt with more even or smoother edges and a slight reduction in the circumferential angle α in the strip.

## Claims

1. A pneumatic tire comprising a tread (25), a carcass (31) and a belt structure (40) interposed between the carcass (31) and the tread (25), wherein the belt structure (40) comprises a zigzag belt structure (39), wherein the zigzag belt structure (39) comprises or is formed of at least two layers of cords interwoven together from a strip (43, 51, 52, 53, 54) of rubber reinforced with one or more cords, wherein the strip (43, 51, 52, 53, 54) is layed up in a first zigzag winding extending between a first lateral zigzag belt edge (44) and a second lateral zigzag belt edge (45) in an at least substantially zigzag or sine wavelength having a first amplitude (W1) in a first direction followed by a second amplitude (W2) in the opposite direction of the first amplitude (W1), wherein the strip (43, 51, 52, 53, 54) is layed up in a second zigzag winding extending between the first lateral zigzag belt edge (44) and the second lateral zigzag belt edge (45) in an at least substantially zigzag or sine wavelength having a first amplitude followed by a second amplitude in the opposite direction of the first amplitude, wherein the belt structure (40) further comprises a pair of working belts (41, 42) with the angle of the working belts ranging of from 15 to 30 degrees with respect to the circumferential direction of the tire, wherein the zigzag belt structure (39) is located radially inward of the working belts (41, 42), and wherein that zigzag belt structure (39) is the narrowest belt of the belt structure (40), **characterized in that** the first amplitude (W1) in the first zigzag winding is different from the second amplitude (W2) in the first zigzag winding and **in that** the first amplitude in the second zigzag winding is different from the second amplitude in the second zigzag winding.

2. The pneumatic tire of claim 1 wherein the second zigzag winding abuts the first zigzag winding.

3. The pneumatic tire of claim 1 or 2 wherein the first and second zigzag windings each have turns at or close to the first and second lateral edges (44, 45); and/or wherein the strip (43, 51, 52, 53, 54) at or close to each lateral zigzag belt edge (44, 45) are extended in a circumferential or substantially circumferential direction for a distance (L), wherein the distance (L) preferably is in a range of from 5 to 80 mm or from 20 to 60 mm.

4. The pneumatic tire of at least one of the previous claims wherein the first zigzag winding is alternated with the second zigzag winding.

5. The pneumatic tire of at least one of the previous claims wherein the zigzag belt structure (39) is radiused at each lateral belt edge (44, 45).

6. The pneumatic tire of at least one of the previous claims wherein the zigzag belt structure (39) extends to a first belt edge point at or close to a lateral zigzag belt edge (44, 45) in a first winding and to a second belt edge point at or close to this lateral zigzag belt edge (44, 45) in a second winding, and wherein the first belt edge point is circumferentially offset a distance (C, D) from the second belt edge point, the offset distance preferably being in a range of from 5 to 120 mm or from 10 to 60 mm.

7. The pneumatic tire of at least one of the previous claims wherein the zigzag belt structure (39) has N zigzag waves per winding wherein N is ≤ 1.

8. The pneumatic tire of at least one of the previous claims wherein the zigzag belt structure (39) has N zigzag waves per winding wherein N is ≥ 1, alternatively ≥ 1.5, or wherein N is 2.

9. The pneumatic tire of claim 1 wherein the zigzag belt structure (39) further comprises a third zigzag winding having a first amplitude (Wmax) at a first lateral end and a second amplitude (Wmin) at a second lateral end, wherein the first and second lateral ends of the third winding are circumferentially offset from the first and second lateral ends of the first zigzag winding and the second zigzag winding, respectively.

10. The pneumatic tire of claim 1 or 9 wherein the zigzag belt structure (39) further comprises a fourth zigzag winding having a first amplitude (Wmin) at a first lateral end and a second amplitude (Wmax) at a second lateral end, wherein the first and second lateral ends of the fourth zigzag winding are each circumferentially offset from the first and second lateral ends of the first zigzag winding and the second zigzag winding, respectively.

11. The tire of claim 9 or 10 wherein the first through third or first through fourth zigzag windings are repeated in order until the zigzag belt structure (39) is formed.

12. The tire of at least one of the previous claims wherein the strip (43, 51, 52, 53, 54) is a continuous strip (43, 51, 52, 53, 54), preferably a single continuous strip (43, 51, 52, 53, 54) forming the whole zigzag belt structure (39).

13. The tire of at least one of the previous claims wherein the strip (43, 51, 52, 53, 54) has a lateral width in a range of from 5 to 40 mm, alternatively in a range of from 9 mm to 20 mm or from 12 mm to 16 mm; and/or wherein the strip (43, 51, 52, 53, 54) is reinforced with steel cord or aramid cord.

14. The tire of at least one of the previous claims wherein the tire (10) further comprises a helically wound circumferential belt layer.

15. The tire of claim 1 wherein the tire is a radial ply aircraft tire or a radial ply truck tire.

## Patentansprüche

1. Luftreifen, umfassend eine Lauffläche (25), eine Karkasse (31) und eine zwischen die Karkasse (31) und die Lauffläche (25) eingefügte Gürtelstruktur (40), wobei die Gürtelstruktur (40) eine Zickzack-Gürtelstruktur (39) umfasst, wobei die Zickzack-Gürtelstruktur (39) mindestens zwei Lagen von Korden umfasst oder daraus gebildet ist, die aus einem Streifen (43, 51, 52, 53, 54) aus mit einem oder mehreren Korden verstärkten Gummi miteinander verwoben sind, wobei der Streifen (43, 51, 52, 53, 54) in einer ersten Zickzackwicklung aufgelegt ist, die sich zwischen einem ersten lateralen Zickzack-Gürtelrand (44) und einem zweiten lateralen Zickzack-Gürtelrand (45) in einer mindestens im Wesentlichen Zickzack- oder Sinus-Wellenlänge erstreckt, welche in einer ersten Richtung eine erste Amplitude (W1) aufweist, gefolgt von einer zweiten Amplitude (W2) in der entgegengesetzten Richtung von der ersten Amplitude (W1), wobei der Streifen (43, 51, 52, 53, 54) in einer zweiten Zickzackwicklung aufgelegt ist, die sich zwischen dem ersten lateralen Zickzack-Gürtelrand (44) und dem zweiten lateralen Zickzack-Gürtelrand (45) in einer mindestens im Wesentlichen Zickzack- oder Sinus-Wellenlänge erstreckt, welche eine erste Amplitude aufweist, gefolgt von einer zweiten Amplitude in der entgegengesetzten Richtung von der ersten Amplitude, wobei die Gürtelstruktur (40) weiter ein Paar Arbeitsgürtel (41, 42) umfasst, wobei der Winkel der Arbeitsgürtel sich auf 15 bis 30 Grad in Bezug auf die Umfangsrichtung des Reifens beläuft, wobei die Zickzack-Gürtelstruktur (39) sich radial einwärts von den Arbeitsgürteln (41, 42) befindet, und wobei diese Zickzack-Gürtelstruktur (39) der schmalste Gürtel der Gürtelstruktur (40) ist, **dadurch gekennzeichnet, dass** die erste Amplitude (W1) in der ersten Zickzackwicklung verschieden von der zweiten Amplitude (W2) in der ersten Zickzackwicklung ist, und dass die erste Amplitude in der zweiten Zickzackwicklung verschieden von der zweiten Amplitude in der zweiten Zickzackwicklung ist.

2. Luftreifen nach Anspruch 1, wobei die zweite Zickzackwicklung an die erste Zickzackwicklung angrenzt.

3. Luftreifen nach Anspruch 1 oder 2, wobei die erste und die zweite Zickzackwicklung jede Wendungen an oder nahe dem ersten und dem zweiten lateralen Rand (44, 45) aufweisen; und/oder wobei der Streifen (43, 51, 52, 53, 54) an oder nahe jedem lateralen Zickzack-Gürtelrand (44, 45) für einen Abstand (L) in einer umfangsgerichteten oder im Wesentlichen umfangsgerichteten Richtung angeordnet ist, wobei der Abstand (L) bevorzugt in einem Bereich von 5 bis 80 mm oder von 20 bis 60 mm liegt.

4. Luftreifen nach mindestens einem der vorhergehenden Ansprüche, wobei die erste Zickzackwicklung mit der zweiten Zickzackwicklung abgewechselt ist.

5. Luftreifen nach mindestens einem der vorhergehenden Ansprüche, wobei die Zickzack-Gürtelstruktur (39) an jedem lateralen Gürtelrand (44, 45) abgerundet ist.

6. Luftreifen nach mindestens einem der vorhergehenden Ansprüche, wobei die Zickzack-Gürtelstruktur (39) sich in einer ersten Wicklung bis zu einem ersten Gürtelrandpunkt an oder nahe einem lateralen Zickzack-Gürtelrand (44, 45) und in einer zweiten Wicklung bis zu einem zweiten Gürtelrandpunkt an oder nahe diesem lateralen Zickzack-Gürtelrand (44, 45) erstreckt, und wobei der erste Gürtelrandpunkt im Umfangsrichtung um einen Abstand (C, D) von dem zweiten Gürtelrandpunkt versetzt ist, wobei der Versatzabstand bevorzugt in einem Bereich von 5 bis 120 mm oder von 10 bis 60 mm liegt.

7. Luftreifen nach mindestens einem der vorhergehenden Ansprüche, wobei die Zickzack-Gürtelstruktur (39) N Zickzackwellen je Wicklung aufweist, wobei N ≤ 1.

8. Luftreifen nach mindestens einem der vorhergehenden Ansprüche, wobei die Zickzack-Gürtelstruktur (39) N Zickzackwellen je Wicklung aufweist, wobei N ≥ 1, alternativ ≥ 1,5, oder wobei N 2 ist.

9. Luftreifen nach Anspruch 1, wobei die Zickzack-Gürtelstruktur (39) weiter eine dritte Zickzackwicklung umfasst, welche an einem ersten lateralen Ende eine erste Amplitude (Wmax) und an einem zweiten lateralen Ende eine zweite Amplitude (Wmin) aufweist, wobei das erste und das zweite laterale Ende der dritten Wicklung in Umfangsrichtung von dem ersten und dem zweiten lateralen Ende der ersten Zickzackwicklung beziehungsweise der zweiten Zickzackwicklung versetzt sind.

10. Luftreifen nach Anspruch 1 oder 9, wobei die Zickzack-Gürtelstruktur (39) weiter eine vierte Zickzackwicklung umfasst, welche an einem ersten lateralen Ende eine erste Amplitude (Wmin) und an einem zweiten lateralen Ende eine zweite Amplitude (Wmax) aufweist, wobei das erste und das zweite laterale Ende der vierten Zickzackwicklung jedes in Umfangsrichtung von dem ersten und dem zweiten lateralen Ende der ersten Zickzackwicklung beziehungsweise der zweiten Zickzackwicklung versetzt sind.

11. Reifen nach Anspruch 9 oder 10, wobei die erste bis einschließlich dritte oder erste bis einschließlich vierte Zickzackwicklung in ihrer Reihenfolge wiederholt werden, bis die Zickzack-Gürtelstruktur (39) gebildet ist.

12. Reifen nach mindestens einem der vorhergehenden Ansprüche, wobei der Streifen (43, 51, 52, 53, 54) ein kontinuierlicher Streifen (43, 51, 52, 53, 54) ist, bevorzugt ein einziger kontinuierlicher Streifen (43, 51, 52, 53, 54), der die gesamte Zickzack-Gürtelstruktur (39) bildet.

13. Reifen nach mindestens einem der vorhergehenden Ansprüche, wobei der Streifen (43, 51, 52, 53, 54) eine laterale Breite im Bereich von 5 bis 40 mm, alternativ im Bereich von 9 mm bis 20 mm oder von 12 mm bis 16 mm aufweist; und/oder wobei der Streifen (43, 51, 52, 53, 54) mit Stahlkord oder Aramidkord verstärkt ist.

14. Reifen nach mindestens einem der vorhergehenden Ansprüche, wobei der Reifen (10) weiter eine schraubenförmig gewickelte umfangsgerichtete Gürtellage umfasst.

15. Reifen nach Anspruch 1, wobei der Reifen ein Flugzeug-Radialreifen oder ein Lastkraftwagen-Radialreifen ist.

## Revendications

1. Bandage pneumatique comprenant une bande de roulement (25), une carcasse (31) et une structure de ceintures (40) intercalée entre la carcasse (31) et la bande de roulement (25) ; dans lequel la structure de ceintures (40) comprend une structure de ceintures en zigzag (39) ; dans lequel la structure de ceintures en zigzag (39) comprend ou est constituée par au moins deux couches de câblés entrelacés les uns avec les autres à partir d'un ruban (43, 51, 52, 53, 54) de caoutchouc renforcé avec un ou plusieurs câblés ; dans lequel le ruban (43, 51, 52, 53, 54) est superposé dans un premier enroulement en zigzag s'étendant entre un premier bord latéral (44) de ceinture en zigzag et un second bord latéral (45) de ceinture en zigzag en une longueur d'onde au moins essentiellement en zigzag ou sinusoïdale possédant une première amplitude (W1) dans une première direction, suivie d'une seconde amplitude (W2) dans la direction opposée à celle de la première amplitude (W1) ; dans lequel le ruban (43, 51, 52, 53, 54) est superposé dans un second enroulement en zigzag s'étendant entre le premier bord latéral (44) de ceinture en zigzag et le second bord latéral (45) de ceinture en zigzag en une longueur d'onde au moins essentiellement en zigzag ou sinusoïdale possédant une première amplitude suivie d'une seconde amplitude dans la direction opposée à celle de la première amplitude ; dans lequel la structure de ceintures (40) comprend en outre une paire de ceintures de travail (41, 42), l'ongle formé par les ceintures de travail se situant dans la plage de 15 à 30° par rapport à la direction circonférentielle du bandage pneumatique ; dans lequel la structure de ceintures en zigzag (39) est disposée en direction radiale à l'intérieur des ceintures de travail (41, 42) : et dans lequel cette structure de ceintures en zigzag (39) représente la ceinture la plus étroite de la structure de ceintures (40), **caractérisé en ce que** la première amplitude (W1) dans le premier enroulement en zigzag est différente de la seconde amplitude (W2) dans le premier enroulement en zigzag, et **en ce que** la première amplitude dans le second enroulement en zigzag est différente de la seconde amplitude dans le second enroulement en zigzag.

2. Bandage pneumatique selon la revendication 1, dans lequel le second enroulement en zigzag vient buter contre le premier enroulement en zigzag.

3. Bandage pneumatique selon la revendication 1 ou 2, dans lequel le premier et le second enroulement en zigzag possèdent chacun des spires aux premier et second bords latéraux (44, 45) ou à proximité de ceux-ci ; et/ou dans lequel le ruban (43, 51, 52, 53, 54) à chaque bord latéral de ceinture en zigzag (44, 45) ou à proximité de ceux-ci s'étend dans une direction circonférentielle ou essentiellement circonférentielle sur une distance (L), dans lequel la distance (L) se situe de préférence dans la plage de 5 à 80 mm ou de 20 à 60 mm.

4. Bandage pneumatique selon au moins une des revendications précédentes, dans lequel le premier enroulement en zigzag alterne avec le second enroulement en zigzag.

5. Bandage pneumatique selon au moins une des revendications précédentes, dans lequel la structure de ceintures en zigzag (39) est arrondie à chaque bord latéral de ceinture (44, 45).

6. Bandage pneumatique selon au moins une des revendications précédentes, dans lequel la structure de ceintures en zigzag (39) s'étend en direction d'un premier point de bord de ceinture à un bord latéral de ceinture en zigzag (44, 45) ou à proximité de celui-ci dans un premier enroulement et en direction d'un second point de bord de ceinture à un bord latéral de ceinture en zigzag (44, 45) ou à proximité de celui-ci dans un second enroulement; et dans lequel le premier point de bord de ceinture est décalé en direction circonférentielle à une distance (C, D) du deuxième point de bord de ceinture, la distance de décalage se situant de préférence dans la plage de 5 à 120 mm ou de 10 à 60 mm.

7. Bandage pneumatique selon au moins une des revendications précédentes, dans lequel la structure de ceintures en zigzag (39) possède N ondulations en zigzag par enroulement, N étant ≤ 1.

8. Bandage pneumatique selon au moins une des revendications précédentes, dans lequel la structure de ceintures en zigzag (39) possède N ondulations en zigzag par enroulement, N étant ≥ 1, en variante ≥ 1,5, ou N étant égal à 2.

9. Bandage pneumatique selon la revendication 1, dans lequel la structure de ceintures en zigzag (39) comprend en outre un troisième enroulement en zigzag possédant une première amplitude (Wmax) à une première extrémité latérale et une seconde amplitude (Wmin) à une seconde extrémité latérale ; dans lequel la première et la seconde extrémité latérale du troisième enroulement sont décalées de la première et de la seconde extrémité latérale du premier enroulement en zigzag et du second enroulement en zigzag, respectivement.

10. Bandage pneumatique selon la revendication 1 ou 9, dans lequel la structure de ceintures en zigzag (39) comprend en outre un quatrième enroulement en zigzag possédant une première amplitude (Wmin) à une première extrémité latérale et une seconde amplitude (Wmax) à une seconde extrémité latérale ; dans lequel la première et la seconde extrémité latérale du quatrième enroulement sont chacune décalées de la première et de la seconde extrémité latérale du premier enroulement en zigzag et du second enroulement en zigzag, respectivement.

11. Bandage pneumatique selon la revendication 9 ou 10, dans lequel les premier à troisième ou les premier à quatrième enroulements en zigzag se répètent dans l'ordre jusqu'à ce que l'on obtienne la structure de ceintures en zigzag (39).

12. Bandage pneumatique selon au moins une des revendications précédentes, dans lequel le ruban (43, 51, 52, 53, 54) est un ruban continu (43, 51, 52, 53, 54), de préférence un ruban continu unique (43, 51, 52, 53, 54) formant l'ensemble de la structure de ceintures en zigzag (39).

13. Bandage pneumatique selon au moins une des revendications précédentes, dans lequel le ruban (43, 51, 52, 53, 54) possède une largeur latérale dans la plage de 5 à 40 mm, en variante dans la plage de 9 mm 20 mm ou de 12 mm à 16 mm ; et/ou dans lequel le ruban (43, 51, 52, 53, 54) est renforcé avec un câblé en acier ou un câblé en aramide.

14. Bandage pneumatique selon au moins une des revendications précédentes, dans lequel le bandage pneumatique (10) comprend en outre une couche de ceinture circonférentielle soumise à un enroulement hélicoïdal.

15. Bandage pneumatique selon la revendication 1, dans lequel le bandage pneumatique est un bandage pneumatique à nappe radiale pour aéroplane ou un bandage pneumatique à nappe radiale pour un camion.
